# FASCICULE DE BREVET EUROPEEN

(11) **EP 1 648 216 B1**
(45) Date de publication et mention de la délivrance du brevet: **03.02.2016**
(21) Numéro de dépôt: 04767878.4
(22) Date de dépôt: 08.07.2004
(51) Int. Cl.: A01B 63/10, A01B 63/11, A01B 73/00, A01D 34/66

(54) **FAUCHEUSE AGRICOLE**
LANDWIRTSCHAFTLICHE MÄHMASCHINE
AGRICULTURAL MOWER

(30) Priorité: 18.07.2003 FR 0308785
(43) Date de publication de la demande: 26.04.2006
(73) Titulaire: KUHN S.A., 67706 Saverne Cedex (FR)
(72) Inventeur: KIEFFER, Fernand, F-67700 Saverne (FR); NEUERBURG, Horst, F-67700 Saverne (FR)
(74) Mandataire: Esch, Esther Evelyne
(86) Numéro de dépôt international: PCT/FR2004/050317
(87) Numéro de publication internationale: WO 2005/009108

(56) Documents cités:
- EP-A- 1 131 992
- DE-A- 10 131 559
- FR-A- 2 642 797
- GB-A- 1 460 664
- US-B1- 6 349 529

## Description

La présente invention se rapporte au domaine technique général du machinisme agricole. Elle concerne plus particulièrement une faucheuse comportant :
- une structure d'attelage destinée à être liée à un véhicule moteur ;
- un mécanisme de coupe s'étendant au travail transversalement à une direction d'avance ;
- une poutre porteuse liée d'une part à ladite structure d'attelage au moyen d'une première articulation pivot d'axe horizontal et d'autre part audit mécanisme de coupe au moyen d'une deuxième articulation pivot dont l'axe est sensiblement parallèle à l'axe de ladite première articulation ;
- un dispositif de manoeuvre destiné à amener ledit mécanisme de coupe par déplacement autour de la première articulation pivot d'une position de travail où il repose au moins partiellement sur le sol à une position de manoeuvre où ledit mécanisme de coupe s'étend quelque peu au-dessus du sol ;
- un dispositif d'allégement destiné à reporter au moins une partie du poids dudit mécanisme de coupe sur ladite structure d'attelage, ledit dispositif d'allégement comportant un vérin hydraulique alimenté en huile par au moins un accumulateur hydropneumatique au moyen d'une première conduite, ledit vérin hydraulique étant disposé de manière à exercer un couple vers le haut sur ledit mécanisme de coupe.

Une telle faucheuse est connue dans l'état de la technique notamment par le document FR-A-2 794 934**.** Avec cette faucheuse connue, le dispositif de manoeuvre destiné à amener le mécanisme de coupe d'une position de travail à une position de manoeuvre est réalisé au moyen d'un deuxième vérin hydraulique. Ce deuxième vérin hydraulique est également disposé de manière à exercer un couple vers le haut sur ledit mécanisme de coupe. Avec cette faucheuse connue, l'utilisateur peut ainsi avantageusement passer d'une position de travail à une position de manoeuvre sans avoir à modifier la position de la structure d'attelage par rapport au véhicule moteur. Le fonctionnement de cette faucheuse connue apporte entière satisfaction à l'utilisateur. Cependant, le coût engendré par l'implantation du deuxième vérin hydraulique n'est pas négligeable. Ainsi cette solution est plutôt destinée aux faucheuses ayant une grande largeur de travail et dont le prix de revient initial relativement élevé est peu influencé par le surcoût dû au deuxième vérin hydraulique.

Le document US 6 349 529 décrit une faucheuse sur laquelle le dispositif de manoeuvre destiné à déplacer le mécanisme de coupe dans une position de manoeuvre est réalisé au moyen d'un vérin hydraulique agissant sur la structure d'attelage de façon à modifier sa position par rapport au véhicule moteur. Cet agencement nécessite ainsi un vérin hydraulique qui augmente le coût de l'ensemble. De plus, à chaque opération il faut déplacer l'ensemble constitué par la structure d'attelage et le mécanisme de coupe. Enfin, le réglage de l'allégement du mécanisme de coupe engendre automatiquement un relèvement ou un abaissement dudit ensemble et par conséquent une variation de la hauteur de coupe.

Le but de la présente invention est de proposer une solution ne présentant pas les inconvénients de celles de l'état de la technique et qui soit notamment moins onéreuse afin que les faucheuses ayant une petite largeur de coupe puissent également avoir la fonction du dispositif de manoeuvre sans pour autant augmenter de manière démesurée leur prix de revient.

A cet effet, la faucheuse selon la présente invention est caractérisée par le fait que ledit dispositif de manoeuvre est constitué d'un cylindre dont l'intérieur est divisé en deux chambres par un piston flottant, une première chambre desdites chambres étant relié au vérin hydraulique du dispositif d'allégement au moyen d'une deuxième conduite et l'autre chambre étant reliée à un circuit hydraulique dudit véhicule moteur au moyen d'une troisième conduite de manière à pouvoir injecter à partir de ladite première chambre une quantité d'huile supplémentaire dans le vérin hydraulique du dispositif d'allégement pour amener le mécanisme de coupe de la position de travail dans la position de manoeuvre, et à pouvoir extraire la même quantité d'huile dudit vérin hydraulique pour amener ledit mécanisme de coupe de la position de manoeuvre dans la position de travail.

Avec la présente invention, il n'est donc pas nécessaire de recourir à un deuxième vérin hydraulique pour obtenir la fonction du dispositif de manoeuvre.

Le vérin hydraulique du dispositif d'allégement sert avantageusement pour l'allégement et pour la manoeuvre du mécanisme de coupe. Le coût engendré par la solution selon la présente invention est donc moindre. De plus, à chaque retour en position de travail, le dispositif retrouve automatiquement la pression initiale et par conséquent le même allégement du mécanisme de coupe. Enfin, ce dispositif rend possible de modifier la pression au sol durant le travail en fonction de la nature du terrain.

D'autres caractéristiques de l'invention, à considérer séparément ou dans toutes leurs combinaisons possibles, apparaîtront encore dans la description suivante d'un exemple de réalisation non limitatif de l'invention représenté sur les dessins annexés sur lesquels :
- la **figure 1** représente, vue de dessus, une faucheuse selon la présente invention en position de travail,
- la **figure 2** représente, vue suivant la flèche II définie à la figure 1, la faucheuse en position de travail,
- la **figure 3** représente, vue suivant la flèche II définie à la figure 1, la faucheuse en position de manoeuvre,
- la **figure 4** représente, vue de dessus, la faucheuse de la figure 1 en position de transport,
- la **figure 5** représente schématiquement le circuit hydraulique de la faucheuse conforme à la présente invention lorsque cette dernière est en position de travail,
- la **figure 6** représente schématiquement le circuit hydraulique lorsque la faucheuse est position de manoeuvre,
- la **figure 7** représente schématiquement le circuit hydraulique lors du réglage du degré d'allégement,
- la **figure 8** représente schématiquement le circuit hydraulique lorsque la faucheuse est en position de transport.

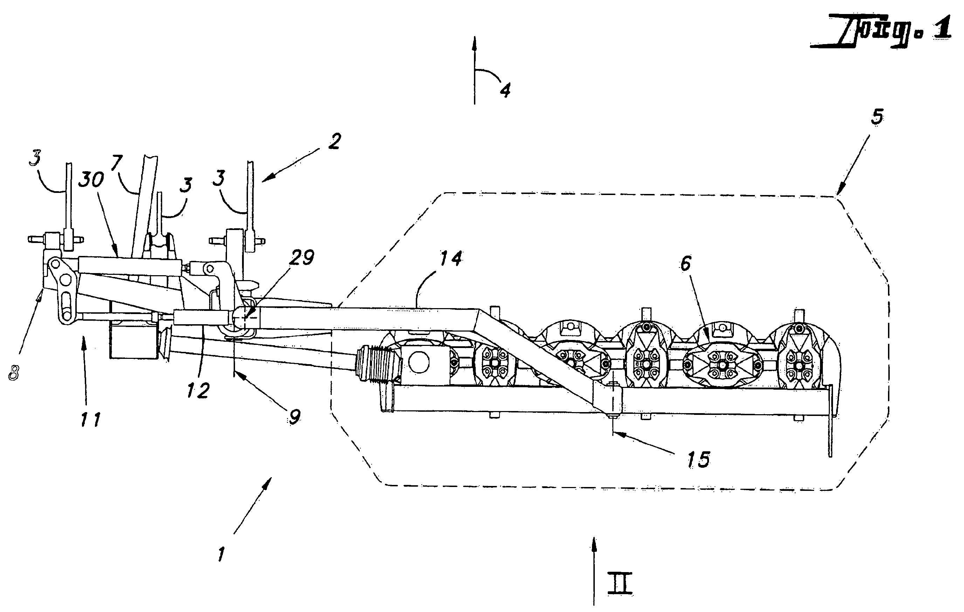

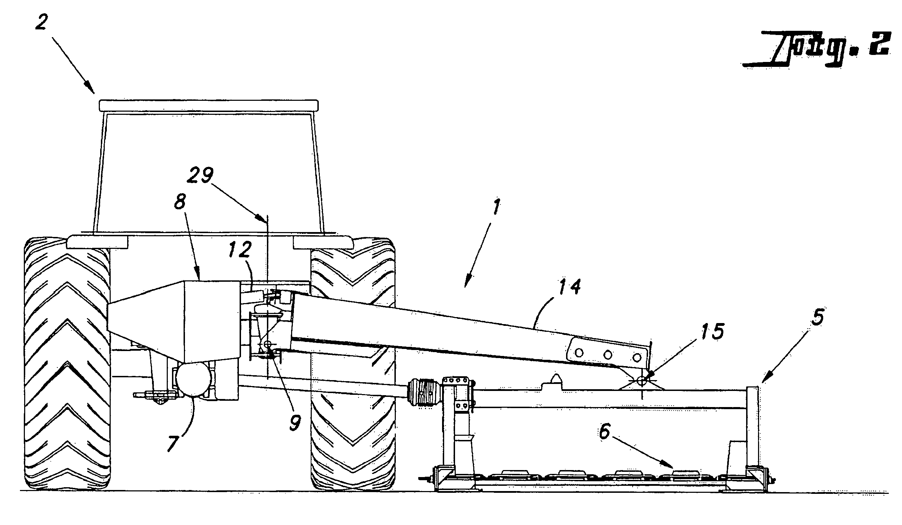

La figure 1 représente, vue de dessus, une faucheuse (1) conforme à la présente invention. Ladite faucheuse (1) est attelée à un véhicule moteur (2) visible à la figure 2. A cet effet, ladite faucheuse (1) comporte une structure d'attelage (8) destinée à être liée aux bras d'attelage (3) dudit véhicule moteur (2). Ledit véhicule moteur (2) tire ladite faucheuse (1) suivant une direction et un sens d'avance représenté par la flèche (4). Dans la suite de la description, les notions suivantes "avant" et "arrière", "devant" et "derrière" sont définies par rapport au sens d'avance (4) et les notions "droite" et "gauche" sont définies en regardant ladite faucheuse (1) de l'arrière dans le sens d'avance (4).

Ladite faucheuse (1) comporte un mécanisme de coupe (5) destiné à couper un produit sur pied, tel que de l'herbe par exemple. Pour ce faire, ledit mécanisme de coupe (5) comporte des organes de coupe (6) entraînés en rotation autour d'un axe respectif dirigé vers le haut. L'entraînement en rotation desdits organes de coupe (6) est assuré à partir d'une prise de force dudit véhicule moteur (2) et au moyen d'éléments de transmission (7). La réalisation d'un tel mécanisme de coupe (5) est connue de l'homme de l'art, il ne sera donc pas décrit d'avantage.

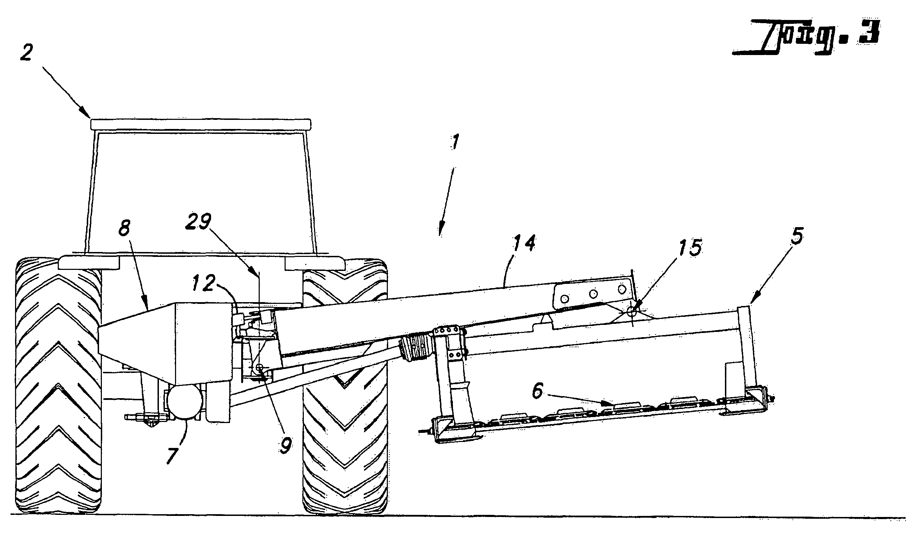

A la lumière des figures 1 et 2, ledit mécanisme de coupe (5) s'étend, lors du travail, transversalement à ladite direction d'avance (4) et il repose au moins partiellement sur le sol. Ledit mécanisme de coupe (5) peut encore occuper une position de manoeuvre dans laquelle il s'étend quelque peu au-dessus du sol comme représentée à la figure 3. Pour ce faire, ladite faucheuse (1) comporte une poutre porteuse (14) dont l'une des extrémités est liée à ladite structure d'attelage (8) au moyen d'une première articulation pivot (9) d'axe horizontal. Lors du travail, l'axe de ladite première articulation (9) est en sus dirigé suivant ladite direction d'avance (4). L'autre extrémité de ladite poutre porteuse (14) est liée audit mécanisme de coupe (5) au moyen d'une deuxième articulation pivot (15) dont l'axe est sensiblement parallèle à l'axe de ladite première articulation (9). Il est également prévu un dispositif de manoeuvre (10) destiné à faire pivoter ledit mécanisme de coupe (5) autour d'au moins l'une desdites articulation (9, 15) de manière à déplacer ledit mécanisme de coupe (5) de ladite position de travail à ladite position de manoeuvre, et inversement. Ledit dispositif de manoeuvre (10) sera décrit en détails ultérieurement.

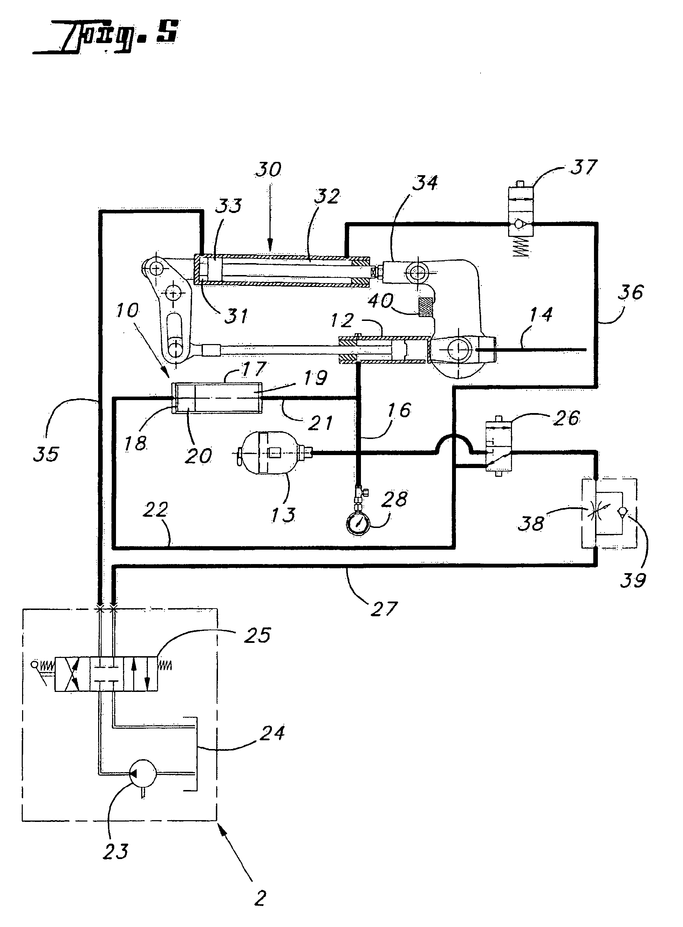

Ladite faucheuse (1) comporte également un dispositif d'allégement (11) destiné à reporter au moins une partie du poids dudit mécanisme de coupe (5) sur ladite structure d'attelage (8). Ledit dispositif d'allégement (11) comporte à cet effet un vérin hydraulique (12) alimenté en huile par au moins un accumulateur hydropneumatique (13). Ledit vérin hydraulique (12) est disposé de manière à exercer un couple vers le haut sur ledit mécanisme de coupe (5), autour d'au moins l'une desdites articulation (9, 15). Dans l'exemple de réalisation représenté sur les figures, ledit vérin hydraulique est plus précisément disposé au-dessus de ladite première articulation (9). De plus, ledit vérin hydraulique (12) est lié d'une part à ladite structure d'attelage (8) et d'autre part à ladite poutre porteuse (14). En se reportant à la figure 5, ledit accumulateur hydropneumatique (13) est lié à la petite chambre dudit vérin hydraulique (12) au moyen d'une première conduite (16). La pression de gonflage dudit accumulateur hydropneumatique (13) permet d'alimenter ledit vérin hydraulique (12) avec de l'huile ayant une certaine pression. Cette pression permet audit vérin (12) d'exercer un couple sur ladite poutre porteuse (14) de manière à reporter une partie du poids dudit mécanisme de coupe (5) sur ladite structure d'attelage (8).

Ledit dispositif de manoeuvre (10) comporte des moyens destinés à injecter une quantité d'huile supplémentaire dans ledit vérin hydraulique (12) pour amener ledit mécanisme de coupe (5) de la position de travail dans la position de manoeuvre, et à extraire la même quantité d'huile dudit vérin hydraulique (12) pour amener ledit mécanisme de coupe (5) de la position de manoeuvre dans la position de travail.

Dans l'exemple de réalisation représenté plus précisément sur les figures 5 à 8, ledit dispositif de manoeuvre (10) est constitué d'un cylindre (17) dont l'intérieur est divisé en deux chambres (18, 19) par un piston flottant (20). Ladite chambre (19) dudit cylindre (17) est liée à la petite chambre dudit vérin (12) au moyen d'une deuxième conduite (21). Plus précisément, ladite deuxième conduite (21) est raccordée à ladite première conduite (16). Pour sa part, ladite chambre (18) est liée au circuit hydraulique dudit véhicule moteur (2) au moyen d'une troisième conduite (22). Ledit véhicule moteur (2) comporte en effet une pompe (23), un réservoir d'huile (24), et un distributeur (25).

La faucheuse (1) selon la présente invention fonctionne de la manière suivante.

La figure 5 représente l'état du circuit hydraulique de ladite faucheuse (1) lorsque ledit mécanisme de coupe (5) est en position de travail. Ledit piston flottant (20) occupe une position extrême, à gauche sur la figure, de manière à ce que ladite chambre (18) ait un volume minimal et que ladite chambre (19) ait un volume maximal. Ladite chambre (19) est remplie d'huile. Lorsque ledit véhicule moteur (2) et ledit mécanisme de coupe (5) repose sur un sol plat, tel que représenté sur la figure 2, ledit vérin hydraulique (12) occupe avantageusement une position intermédiaire. La course disponible dudit vérin hydraulique (12) permet audit mécanisme de coupe (5) de descendre et de monter par rapport à ladite structure d'attelage (8) de manière à suivre les dénivelés du sol indépendamment de la position dudit véhicule moteur (2). Les dénivelés du sol provoquent alors des variations de volume de la petite chambre dudit vérin hydraulique (12). Ces variations de volume sont compensées par l'huile contenue dans ledit accumulateur hydropneumatique (13).

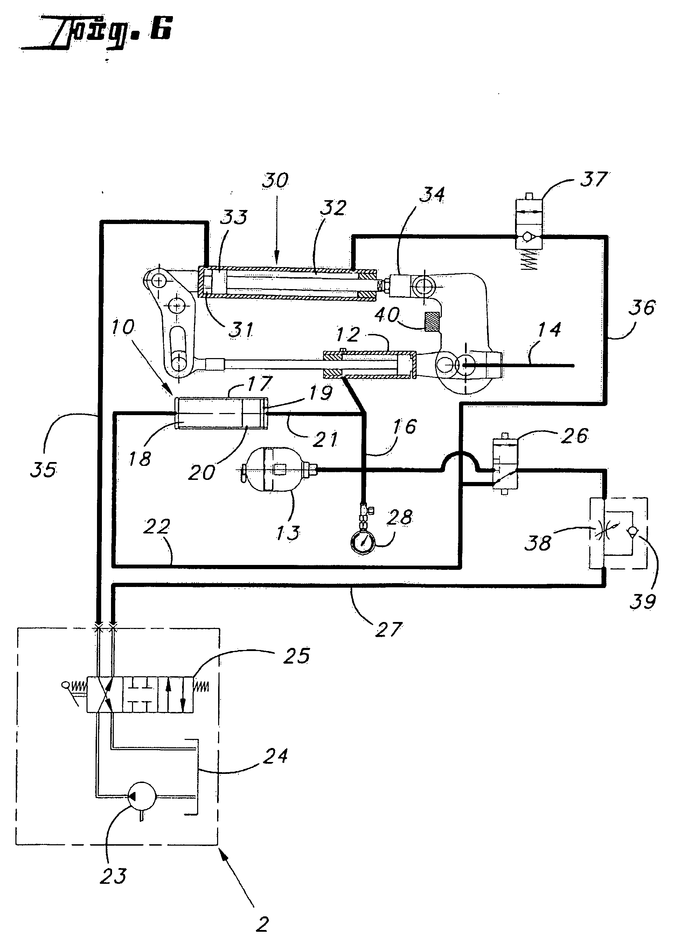

A la lumière de la figure 6, pour mettre ledit mécanisme de coupe (5) en position de manoeuvre, l'utilisateur agit sur ledit distributeur (25) afin de lier ladite troisième conduite (22) à ladite pompe (23). L'huile provenant de ladite pompe (23) alimente ladite chambre (18) et provoque le déplacement dudit piston flottant (20) à l'intérieur dudit cylindre (17). L'huile contenue initialement dans ladite chambre (19) est alors injectée dans la petite chambre dudit vérin hydraulique (12) via ladite deuxième conduite (21) et ladite première conduite (16). Cette quantité d'huile supplémentaire engendre la rétraction dudit vérin hydraulique (12) et donc le soulèvement dudit mécanisme de coupe (5). Celui-ci se situe alors quelque peu au-dessus du niveau du sol, ce qui facilite les manoeuvres en bout de parcelle par exemple.

Pour passer à nouveau en position de travail, l'utilisateur agit sur ledit distributeur (25) de manière, cette fois, à lier ladite troisième conduite (22) audit réservoir (24). La pression dans ladite chambre (18) retombe sensiblement à zéro. La pression de gonflage dudit accumulateur hydropneumatique (13) et le poids dudit mécanisme de coupe (5) via ledit vérin hydraulique (12) provoquent alors le déplacement dudit piston flottant (20), vers la gauche sur les figures 5 et 6. Une fois que ledit piston flottant (20) a atteint sa position extrême représentée sur la figure 5, toute l'huile contenue dans ladite chambre (18) est retournée dans ledit réservoir (24). Pour sa part, ladite quantité d'huile supplémentaire est extraite dudit vérin hydraulique (12) pour retourner dans ladite chambre (19). L'utilisateur retrouve donc exactement la situation représentée à la figure 5. La quantité d'huile présente dans ledit vérin hydraulique (12), ladite première conduite (16) et ledit accumulateur hydropneumatique (13) est exactement la même que lors de la position de travail précédente. L'utilisateur retrouve donc avantageusement la pression initiale dudit accumulateur hydropneumatique (13) et par conséquent le même allégement dudit mécanisme de coupe (5).

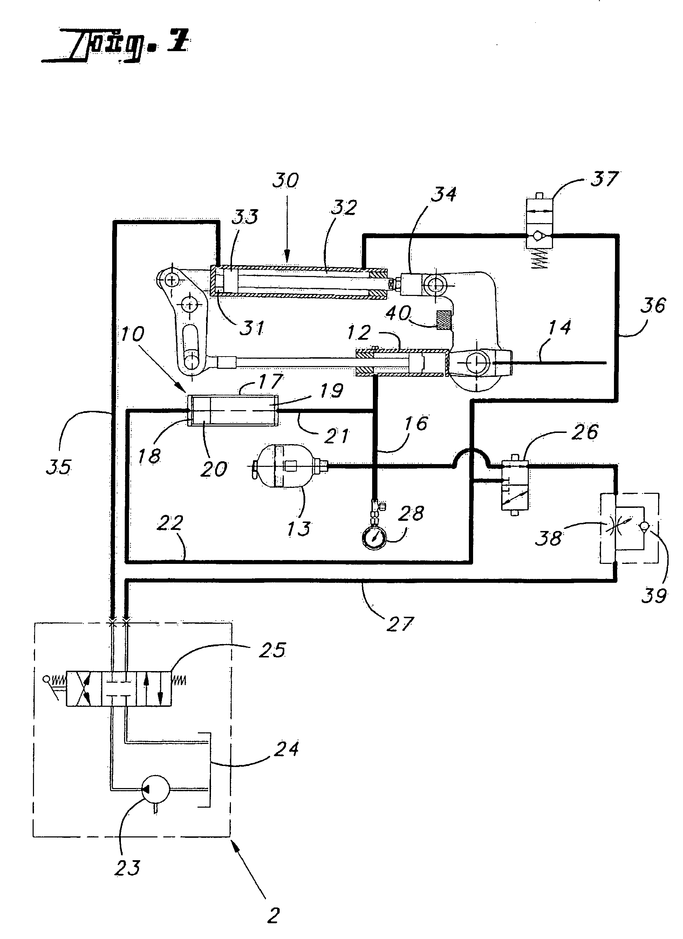

D'une manière préférentielle, ladite faucheuse (1) comporte un robinet (26) à trois voies pouvant occuper deux positions. L'entrée dudit robinet (26) est liée audit distributeur (25) au moyen d'une quatrième conduite (27). Une sortie dudit robinet (26) est liée à ladite troisième conduite (22). L'autre sortie dudit robinet (26) est liée à ladite première conduite (16). Lorsque ledit robinet (26) occupe une première position telle que représentée sur les figures 5 et 6, ladite troisième conduite (22) est en communication avec ladite quatrième conduite (27). Pour sa part, la sortie liée à ladite première conduite (16) est fermée. Cette première position du robinet (26) permet le fonctionnement décrit ci-dessus de ladite faucheuse (1). Lorsque ledit robinet (26) occupe une deuxième position telle que représentée sur la figure 7, ladite première conduite (16) est en communication avec ladite quatrième conduite (27). Pour sa part, la sortie liée à ladite troisième conduite (22) est fermée. Cette deuxième position dudit robinet (26) permet à l'utilisateur de régler la pression dudit accumulateur (13) durant le travail et donc le degré d'allégement dudit mécanisme de coupe (5). En agissant sur ledit distributeur (25) lorsque ledit robinet est dans la deuxième position, l'utilisateur peut augmenter ou diminuer la quantité d'huile présente dans ledit vérin hydraulique (12), ladite première conduite (16) et ledit accumulateur hydropneumatique (13). La sortie dudit robinet (26) liée à ladite troisième conduite (22) étant fermée, ledit piston flottant (20) ne peut pas se déplacer. La quantité d'huile ajoutée ou enlevée par l'utilisateur agit donc directement sur la pression du gaz contenu dans ledit accumulateur (13). D'une manière préférentielle, il est prévu un manomètre (28) branché sur ladite première conduite (16) afin d'indiquer à l'utilisateur la pression régnant dans ledit accumulateur hydropneumatique (13).

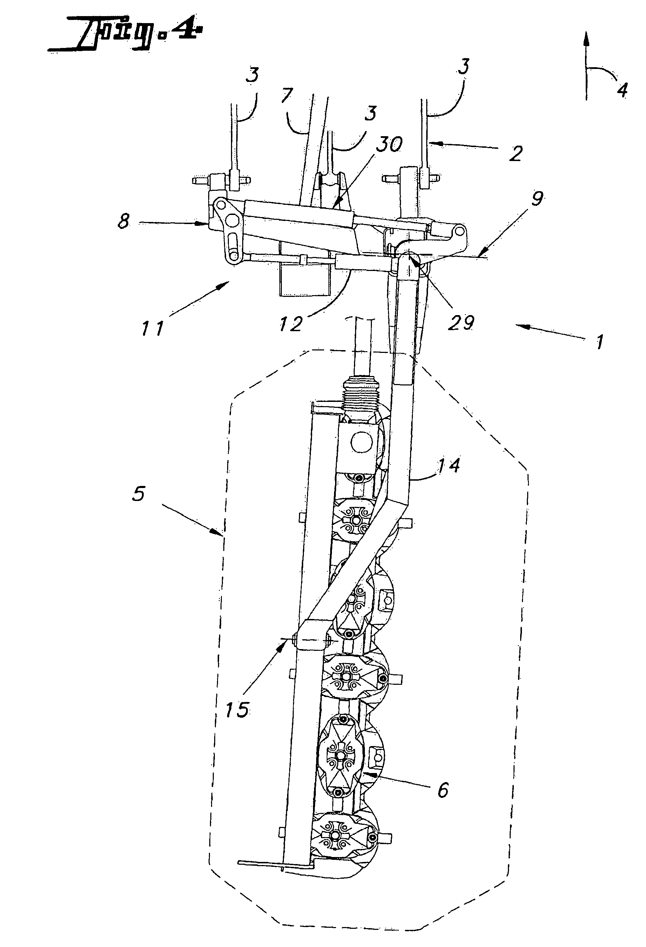

D'une manière préférentielle, ladite poutre porteuse (14) est liée à ladite structure d'attelage (8) en sus au moyen d'une troisième articulation pivot (29) d'axe dirigé vers le haut. Ainsi à la lumière de la figure 4, ledit mécanisme de coupe (5) et ladite poutre porteuse (14) sont conjointement pivotés vers l'arrière autour de ladite troisième articulation (29) lors du transport. A cet effet, il est prévu un deuxième vérin hydraulique (30) lié d'une part à ladite structure d'attelage (8) et d'autre part à ladite poutre porteuse (14).

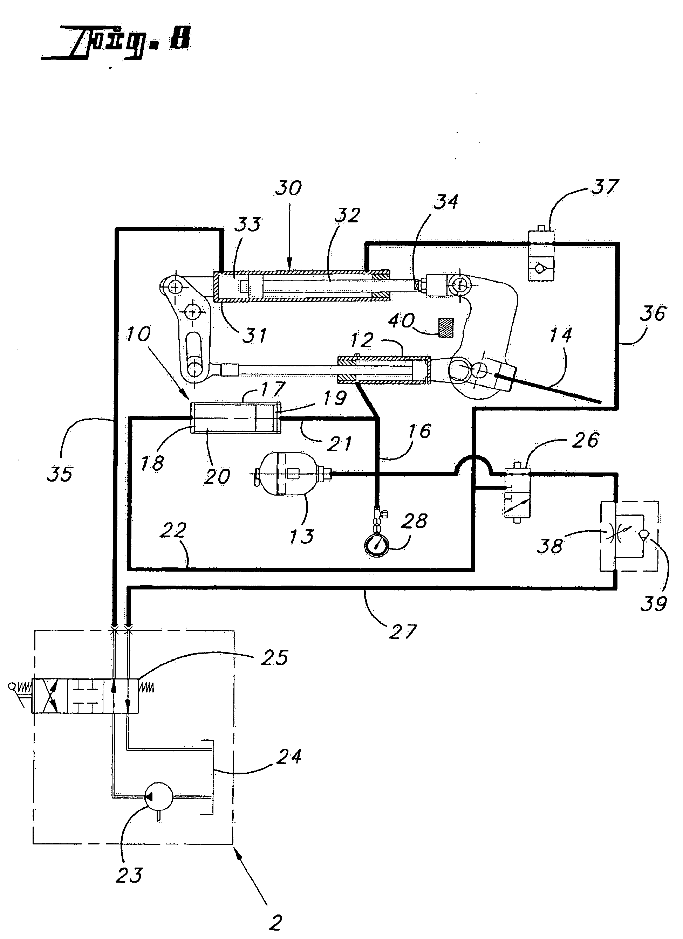

A la lumière des figures 5 à 8, ledit deuxième vérin hydraulique (30) est un vérin double effet. Ledit deuxième vérin hydraulique (30) comporte donc une première chambre (31) et une deuxième chambre (32) délimitées par un piston (33), ledit piston (33) étant solidaire d'une tige (34) liée à ladite poutre porteuse (14). Ladite première chambre (31) est liée audit distributeur (25) au moyen d'une cinquième conduite (35). Ledit distributeur (25) est ainsi un distributeur double effet dont les sorties sont raccordées à ladite quatrième conduite (27) et à ladite cinquième conduite (35). Ladite deuxième chambre (32) est liée à ladite troisième conduite (22) via une sixième conduite (36). Ladite sixième conduite (36) comporte un deuxième distributeur (37) pouvant occuper deux positions. Dans une première position telle que représentée sur les figures 5 à 7, ledit deuxième distributeur (37) se comporte comme un clapet anti-retour empêchant toute sortie d'huile de ladite deuxième chambre (32). Dans une deuxième position telle que représentée sur la figure 8, ledit deuxième distributeur (37) permet le libre passage d'huile dans ladite sixième conduite (36). D'une manière préférentielle, il est en sus prévu un limiteur de débit (38) et un clapet anti-retour (39) montés en parallèle sur ladite quatrième conduite (27). Ledit limiteur de débit (38) est de préférence réglable.

La mise en position de travail, la mise en position de manoeuvre et le réglage du degré d'allégement sont semblables à ceux déjà décrits précédemment. Ledit limiteur de débit (38) et ledit clapet anti-retour (39) permettent avantageusement de freiner le retour d'huile vers ledit réservoir (24). Il en résulte que le retour à la position de travail et la diminution de l'allégement se font plus lentement. Alors que la mise en position de manoeuvre et l'augmentation de l'allégement se font à vitesse normale.

A la lumière de la figure 5, la mise en position de manoeuvre provoque également la mise sous pression de ladite sixième conduite (36) et de ladite deuxième chambre (32). Ladite poutre porteuse (14) est donc maintenue plaquée contre une butée (40). Ledit mécanisme de coupe (5) reste disposé transversalement à ladite direction d'avance (4). Le retour en position de travail provoque la mise sous pression de ladite cinquième conduite (35). Par contre ledit deuxième distributeur (37) joue ici le rôle d'un clapet anti-retour. Ledit deuxième vérin (30) ne peut pas s'allonger. Ledit mécanisme de coupe (5) reste encore une fois disposé transversalement à ladite direction d'avance (4).

En se referant à la figure 8, pour la mise en position de transport, l'utilisateur agit dans un premier temps sur ledit deuxième distributeur (37) de manière à laisser un libre passage à l'huile dans ladite sixième conduite (36). L'utilisateur agit ensuite sur ledit distributeur (25) dudit véhicule moteur (2) afin de lier ladite cinquième conduite (35) à ladite pompe (23) et de lier ladite quatrième conduite (27) audit réservoir (24). L'huile sous pression arrivant dans ladite première chambre (31) dudit deuxième vérin (30) pousse ledit piston (33), ce qui provoque la sortie de ladite tige (34). L'huile contenue dans ladite deuxième chambre (32) est injectée dans ladite troisième conduite (22) via ladite sixième conduite (36) et ledit deuxième distributeur (37) qui est maintenant passant. D'une manière particulièrement avantageuse, ledit limiteur de débit (38) freine le retour de cette huile vers ledit réservoir (24). Cela provoque une augmentation de la pression dans ladite troisième conduite (22). Ledit piston flottant (20) dudit cylindre (17) est alors déplacé vers la droite. Ledit vérin hydraulique (12) se rétracte et ledit mécanisme de coupe (5) est décollé du sol. Lorsque ledit deuxième vérin hydraulique (30) a atteint son extension maximale, ledit mécanisme de coupe (5) est orienté suivant ladite direction d'avance (4) comme à la figure 4. Une butée mécanique, non représentée, permet avantageusement de maintenir ledit mécanisme de coupe (5) incliné vers le haut. Ainsi lors du transport, la garde au sol de ladite faucheuse (1) est avantageusement augmentée.

La faucheuse qui vient d'être décrite, n'est qu'un exemple de réalisation qui ne saurait en aucun cas limiter le domaine de protection défini par les revendications suivantes.

## Revendications

1. Faucheuse comportant :
- une structure d'attelage (8) destinée à être liée à un véhicule moteur (2) ;
- un mécanisme de coupe (5) s'étendant au travail transversalement à une direction d'avance (4) ;
- une poutre porteuse (14) liée d'une part à ladite structure d'attelage (8) au moyen d'une première articulation pivot (9) d'axe horizontal et d'autre part audit mécanisme de coupe (5) au moyen d'une deuxième articulation pivot (15) dont l'axe est sensiblement parallèle à l'axe de ladite première articulation (9) ;
- un dispositif de manoeuvre (10) destiné à amener ledit mécanisme de coupe (5) par déplacement autour de la première articulation pivot (9) d'une position de travail où il repose au moins partiellement sur le sol à une position de manoeuvre où ledit mécanisme de coupe (5) s'étend quelque peu au-dessus du sol, et inversement ;
- un dispositif d'allégement (11) destiné à reporter au moins une partie du poids dudit mécanisme de coupe (5) sur ladite structure d'attelage (8), ledit dispositif d'allégement (11) comportant un vérin hydraulique (12) alimenté en huile par au moins un accumulateur hydropneumatique (13) au moyen d'une première conduite (16), ledit vérin hydraulique (12) étant disposé de manière à exercer un couple vers le haut sur ledit mécanisme de coupe (5) ;
***caractérisée par le fait que*** ledit dispositif de manoeuvre (10) est constitué d'un cylindre (17) dont l'intérieur est divisé en deux chambres (18, 19) par un piston flottant (20), qu'une première chambre (19) desdites chambres (18, 19) est reliée audit vérin hydraulique (12) au moyen d'une deuxième conduite (21) et que l'autre chambre (18) est reliée à un circuit hydraulique dudit véhicule moteur (2) au moyen d'une troisième conduite (22) de manière à pouvoir injecter à partir de ladite première chambre (19) une quantité d'huile supplémentaire dans le vérin hydraulique (12) du dispositif d'allégement pour amener le mécanisme de coupe (5) de la position de travail dans la position de manoeuvre, et à pouvoir extraire la même quantité d'huile dudit vérin hydraulique (12) pour amener ledit mécanisme de coupe (5) de la position de manoeuvre dans la position de travail.

2. Faucheuse selon la revendication 1, ***caractérisée par le fait qu'***il est prévu un robinet (26) à trois voies, l'entrée dudit robinet (26) étant liée au circuit hydraulique dudit véhicule moteur (2) au moyen d'une quatrième conduite (27), une sortie dudit robinet (26) étant liée à ladite troisième conduite (22), et l'autre sortie dudit robinet (26) étant liée à ladite première conduite (16).

3. Faucheuse selon la revendication 2, ***caractérisée par le fait qu'***il est prévu un limiteur de débit (38) sur ladite quatrième conduite (27).

4. Faucheuse selon la revendication 3, ***caractérisée par** le fait qu*' il est prévu un clapet anti-retour (39) monté en parallèle avec ledit limiteur de débit (38) sur ladite quatrième conduite (27).

5. Faucheuse selon l'une quelconque des revendications 1 à 4, ***caractérisée par le fait que*** ladite poutre porteuse (14) est liée à ladite structure d'attelage (8) en sus au moyen d'une troisième articulation pivot (29) d'axe dirigé vers le haut, et ***par le fait qu'*il** est prévu un deuxième vérin hydraulique (30) lié d'une part à ladite structure d'attelage (8) et d'autre part à ladite poutre porteuse (14) afin de pivoter vers l'arrière, autour de ladite troisième articulation (29), ledit mécanisme de coupe (5) et ladite poutre porteuse (14) lors du transport.

6. Faucheuse selon la revendication 5, ***caractérisée par le fait que*** ledit deuxième vérin hydraulique (30) comporte une première chambre (31) et une deuxième chambre (32) délimitées par un piston (33), ladite première chambre (31) étant liée au circuit hydraulique dudit véhicule moteur (2) au moyen d'une cinquième conduite (35).

7. Faucheuse selon la revendication 6, ***caractérisée par le fait que*** ladite deuxième chambre (32) est liée à la troisième conduite (22) au moyen d'une sixième conduite (36).

8. Faucheuse selon la revendication 7, ***caractérisée par le fait qu'***il est prévu sur la sixième conduite (36) un distributeur (37) pouvant occuper deux positions.

## Patentansprüche

1. Mähmaschine mit:
- einem Kupplungswerk (8), das dazu bestimmt ist, mit einem Kraftfahrzeug (2) verbunden zu werden;
- einem Schneidmechanismus (5), der sich bei der Arbeit quer zu einer Vorschubrichtung (4) erstreckt;
- einem Tragbalken (14), der einerseits mit dem Kupplungswerk (8) mittels eines ersten Drehgelenks (9) mit horizontaler Achse verbunden ist, und andererseits mit dem Schneidmechanismus (5) mittels eines zweiten Drehgelenks (15), dessen Achse im Wesentlichen parallel zur Achse des ersten Gelenks (9) verläuft;
- einer Betätigungsvorrichtung (10), die dazu bestimmt ist, den Schneidmechanismus (5) durch Bewegen um das erste Drehgelenk (9) von einer Arbeitsstellung, in der er mindestens teilweise auf dem Boden aufliegt, in eine Betätigungsstellung zu bringen, in der sich der Schneidmechanismus (5) etwas über dem Boden erstreckt, und umgekehrt;
- einer Entlastungsvorrichtung (11), die dazu bestimmt ist, mindestens einen Teil des Gewichts des Schneidmechanismus (5) auf das Kupplungswerk (8) zu verlagern, wobei die Entlastungsvorrichtung (11) einen Hydraulikzylinder (12) umfasst, der von mindestens einem hydropneumatischen Speicher (13) mittels eines ersten Leitungsrohres (16) mit Öl versorgt wird, wobei der Hydraulikzylinder (12) so angeordnet ist, dass er ein Moment nach oben auf den Schneidmechanismus (5) ausübt;
***dadurch gekennzeichnet,* dass** die Betätigungsvorrichtung (10) von einem Zylinder (17) gebildet wird, dessen Inneres durch einen Schwebekolben (20) in zwei Kammern (18, 19) getrennt wird, dass eine erste Kammer (19) der Kammern (18, 19) mit dem Hydraulikzylinder (12) mittels eines zweiten Leitungsrohres (21) verbunden ist, und dass die andere Kammer (18) mit einem Hydraulikkreis des Kraftfahrzeugs (2) mittels eines dritten Leitungsrohres (22) verbunden ist, so dass ausgehend von der ersten Kammer (19) eine zusätzliche Menge Öl in den Hydraulikzylinder (12) der Entlastungsvorrichtung eingespritzt werden kann, um den Schneidmechanismus (5) von der Arbeitsstellung in die Betätigungsstellung zu bringen, und dass die gleiche Menge Öl aus dem Hydraulikzylinder (12) ausgetragen werden kann, um den Schneidmechanismus (5) von der Betätigungsstellung in die Arbeitsstellung zu bringen.

2. Mähmaschine nach Anspruch 1, ***dadurch gekennzeichnet,* dass** ein Dreiwegeventil (26) vorgesehen ist, wobei der Eingang des Ventils (26) mit dem Hydraulikkreis des Kraftfahrzeugs (2) mittels eines vierten Leitungsrohres (27) verbunden ist, wobei ein Ausgang des Ventils (26) mit dem dritten Leitungsrohr (22) verbunden ist, und wobei der andere Ausgang des Ventils (26) mit dem ersten Leitungsrohr (16) verbunden ist.

3. Mähmaschine nach Anspruch 2, ***dadurch gekennzeichnet,* dass** ein Durchflussbegrenzer (38) am vierten Leitungsrohr (27) vorgesehen ist.

4. Mähmaschine nach Anspruch 3, ***dadurch gekennzeichnet,* dass** ein Rückschlagventil (39) vorgesehen ist, das parallel mit dem Durchflussbegrenzer (38) am vierten Leitungsrohr (27) angebracht ist.

5. Mähmaschine nach irgend einem der Ansprüche 1 bis 4, ***dadurch gekennzeichnet,* dass** der Tragbalken (14) mit dem Kupplungswerk (8) zusätzlich mittels eines dritten Drehgelenks (29) mit nach oben gerichteter Achse verbunden ist, und ***dadurch,*** dass ein zweiter Hydraulikzylinder (30) vorgesehen ist, der einerseits mit dem Kupplungswerk (8) und andererseits mit dem Tragbalken (14) verbunden ist, um den Schneidmechanismus (5) und den Tragbalken (14) beim Transport um das dritte Gelenk (29) nach hinten zu schwenken.

6. Mähmaschine nach Anspruch 5, ***dadurch gekennzeichnet,* dass** der zweite Hydraulikzylinder (30) eine erste Kammer (31) und eine zweite Kammer (32) umfasst, die von einem Kolben (33) getrennt werden, wobei die erste Kammer (31) mit dem Hydraulikkreis des Kraftfahrzeugs (2) mittels eines fünften Leitungsrohres (35) verbunden ist.

7. Mähmaschine nach Anspruch 6, ***dadurch gekennzeichnet,* dass** die zweite Kammer (32) mit dem dritten Leitungsrohr (22) mittels eines sechsten Leitungsrohres (36) verbunden ist.

8. Mähmaschine nach Anspruch 7, ***dadurch gekennzeichnet,* dass** am sechsten Leitungsrohr (36) ein Verteiler (37) vorgesehen ist, der zwei Stellungen einnehmen kann.

## Claims

1. Mower comprising:
- a hitching structure (8) intended to be connected to a motor vehicle (2);
- a cutting mechanism (5) extending during work transversely to a direction of advance (4);
- a carrier beam (14) connected on the one hand to the said hitching structure (8) by means of a first pivot articulation (9) with a horizontal axis and on the other hand to the said cutting mechanism (5) by means of a second pivot articulation (15) whose axis is substantially parallel to the axis of the said first articulation (9);
- a maneuvering device (10) intended to bring the said cutting mechanism (5) by displacement around the first pivot articulation (9) from a work position, in which it rests at least partially on the ground, to a maneuvering position in which the said cutting mechanism (5) extends somewhat above the ground, and vice versa;
- a lightening device (11) intended to transfer at least a part of the weight of the said cutting mechanism (5) onto the said hitching structure (8), the said lightening device (11) comprising a hydraulic jack (12) fed with oil by at least one hydropneumatic accumulator (13) by means of a first pipe (16), the said hydraulic jack (12) being arranged so as to exert an upward torque on the said cutting mechanism (5);
***characterized in* that** the said maneuvering device (10) consists of a cylinder (17) whose interior is divided into two chambers (18, 19) by a floating piston (20), **in that** a first chamber (19) of the said chambers (18, 19) is connected to the said hydraulic jack (12) by means of a second pipe (21) and **in that** the other chamber (18) is connected to a hydraulic circuit of the said motor vehicle (2) by means of a third pipe (22) so as to be able to inject from the said first chamber (19) an additional quantity of oil into the hydraulic jack (12) of the lightening device to bring the cutting mechanism (5) from the work position into the maneuvering position, and to be able to extract the same quantity of oil from the said hydraulic jack (12) to bring the said cutting mechanism (5) from the maneuvering position into the work position.

2. Mower according to claim 1, ***characterized in* that** a three-way valve (26) is provided, the inlet of the said valve (26) being connected to the hydraulic circuit of the said motor vehicle (2) by means of a fourth pipe (27), one outlet of the said valve (26) being connected to the third pipe (22), and the other outlet of the said valve (26) being connected to the said first pipe (16).

3. Mower according to claim 2, ***characterized in* that** a flow limiter (38) is provided on the said fourth pipe (27).

4. Mower according to claim 3, ***characterized in* that** an anti-return valve (39) is provided, mounted in parallel with the said flow limiter (38) on the said fourth pipe (27).

5. Mower according to any one of claims 1 to 4, ***characterized in* that** the said carrier beam (14) is additionally connected to the said hitching structure (8) by means of a third pivot articulation (29) with an upward-directed axis, and **in that** a second hydraulic jack (30) is provided, connected on the one hand to the said hitching structure (8) and on the other hand to the said carrier beam (14) in order to pivot rearward the said cutting mechanism (5) and the said carrier beam (14) about the said third articulation (29) during transport.

6. Mower according to claim 5, ***characterized in* that** the said second hydraulic jack (30) comprises a first chamber (31) and a second chamber (32) delimited by a piston (33), the said first chamber (31) being connected to the hydraulic circuit of the said motor vehicle (2) by means of a fifth pipe (35).

7. Mower according to claim 6, ***characterized in* that** the said second chamber (32) is connected to the third pipe (22) by means of a sixth pipe (36).

8. Mower according to claim 7, ***characterized in* that**, on the sixth pipe (36), a distributor (37) is provided that can occupy two positions.
